# NEW EUROPEAN PATENT SPECIFICATION

(11) **EP 1 868 847 B2**
(45) Date of publication and mention of the opposition decision: **03.04.2013**
(45) Mention of the grant of the patent: 10.03.2010
(21) Application number: 06717093.6
(22) Date of filing: 10.04.2006
(51) Int. Cl.: B60R 9/06

(54) **DEVICE FOR A LOAD CARRIER ATTACHED TO A VEHICLE**
VORRICHTUNG FÜR EINEN AN EINEM FAHRZEUG BEFESTIGTEN LASTTRÄGER
DISPOSITIF POUR ENSEMBLE PORTEUR DE CHARGE FIXE A UN VEHICULE

(30) Priority: 15.04.2005 SE 0500852
(43) Date of publication of application: 26.12.2007
(73) Proprietor: BOS GmbH & Co. KG, 73760 Ostfildern (DE)
(72) Inventor: LARSSON, Wilhelm, S-331 51 Värnamo (SE); JANARNE, Wetterheim, S-554 51 Jönköping (SE)
(74) Representative: Patentanwälte Ruff, Wilhelm, Beier, Dauster & Partner
(86) International application number: PCT/SE2006/000418
(87) International publication number: WO 2006/110078

(56) References cited:
- EP-A1- 1 059 205
- EP-A1- 1 609 678
- EP-A1- 1 700 745
- EP-A2- 1 211 134
- WO-A1-99/14079
- DE-A1- 4 241 142
- DE-A1- 10 055 994
- DE-T2-602005 000 912
- DE-U1- 9 403 668
- DE-U1-202005 004 043
- FR-A- 809 094
- GB-A- 158 448
- JP-A- 11 034 727
- US-A- 1 815 656
- US-A- 3 103 289
- US-A- 3 731 830
- US-A- 3 757 975
- US-A- 3 760 965
- US-A- 3 843 001
- US-A- 5 303 857
- US-A- 5 527 055
- US-A- 5 536 130
- US-A- 5 664 717
- US-A- 5 685 686
- US-A- 5 730 345
- US-A- 5 881 937
- US-A- 6 036 070
- US-A- 6 123 498
- US-A- 6 152 341
- US-A1- 20020 005 423
- US-B1- 6 401 999
- US-B1- 6 443 345
- US-B1- 6 485 243
- US-B2- 6 745 926

## Description

The present invention refers to a load carrier for a vehicle, which load carrier having a first part firmly connected with a coupling device for fastening at the vehicle, a thereto displaceable second part movable connected with said first part and having holders for carrying load.
Through US 3757975 a load carrier according to the preambles of claims 1 and 9 is known

Through US 6 152 341 a load carrier is previously known, which with aid of a arrangement of telescopic tubes can be moved out from the vehicle. It becomes thus possible to get access to a luggage trunk of the vehicle without that the lid of the trunk hit into the load carrier. The previously known device comprising ball bearings for facilitating retraction and extraction of the telescopic tubes. The disadvantage with the previously known load carrier is that the telescopic tubes must be dimensioned in order to be moved out relatively far from the vehicle, so that the lid of the trunk should not hit the load carrier. For example, in connection with a load carrier for bicycles, or other high load, the distance may become so big that the force, which acting on the fastening of the load carrier at the vehicle, becomes to big to carry the load carrier with load via the lever of the telescopic tubes.

Through SE 522 911 a coupling device for a load carrier is previously known. The previously known coupling device comprising gripping means, which enclose a towing hook, wherein a force being applied to clamp the gripping means together. By adapting the force, an intermediate position may be achieved, in which the friction against towing hook is such that the coupling device remains in an adjusted position, but can possible be turned around the ball of the towing hook, by exerting an external force. Thus, it becomes possible to tilt the coupling device downwards, together with the load carrier, at a desired access to a luggage compartment of the vehicle. The previously known device has functioning sufficient, but a disadvantage with this solution and similar previously known solutions, is that it can be hard to get access to operate the devises which control the gripping means, when a load carrier support being loaded, with several bicycles, a box or similar.

The purpose with the present invention is to achieve a compact and easy operated tilting function for a load carrier, which simultaneously increase the access to the trunk of the vehicle.

The present invention overcomes the above described disadvantages with a load carrier of introductory mentioned kind, as defined in claims 1 and 9.

The first part comprises at least one curved guiding rail, which extends backwards out of the vehicle, wherein the second part comprises at least one transport device, which runs along said guiding rail.

The first part is formed of an essential rectangular framework, comprising a coupling device fastened to an inner beam, which coupling device is intended to be anchored at a towing hook or similar of the vehicle, and at least one side bracket, which extends out from the vehicle and supports the curved guiding rail.

Suitable, the curved guiding rail is in the shape of a T-profile and preferably said transport device comprising a carriage or a sledge, provided with at least two pair of wheels or similar rolling or sliding devices, which runs on each side of the curved guiding rail. Alternately, the curved guiding rail is in the shape of a C-profile and said transport device comprising a carriage or a sledge, provided with at least two wheels or similar rolling or sliding devices, which runs in the curved guiding rail.

Further, the curved guiding rail having at least one stop notch arranged in each end, which cooperate with at least one recess in the transport device.

By forming said recess with inclined engagement surfaces a centring of the transport device, relatively the curved guiding rail, is achieved, and thereby a stress relieving of the wheels.

Preferably, the load carrier having at least one locking clutch, which fix the second part to the first part in the transporting position. The locking clutch operates suitable by a handle, which is located behind a holder for a licence plate. The handle is in transporting position hidden by the holder, wherein the holder preferably is arranged tiltable and designed in such way that, in a raised position, the holder locks the handle from moving.

The invention will hereafter be described closer with reference to a preferred embodiment, as shown in enclosed figures, in which:
Fig. 1 is a view in perspective of a load carrier according to the present invention.
Fig. 2 is a view in detail of a first part of a load carrier, according to figure 1.
Fig. 3 is a view in detail of a second part of a load carrier, according to figure 1.
Fig. 4 is a schematic view of a load carrier in a transporting position.
Fig. 5 is a schematic view of a load carrier in a tilted loading position mounted on a vehicle.

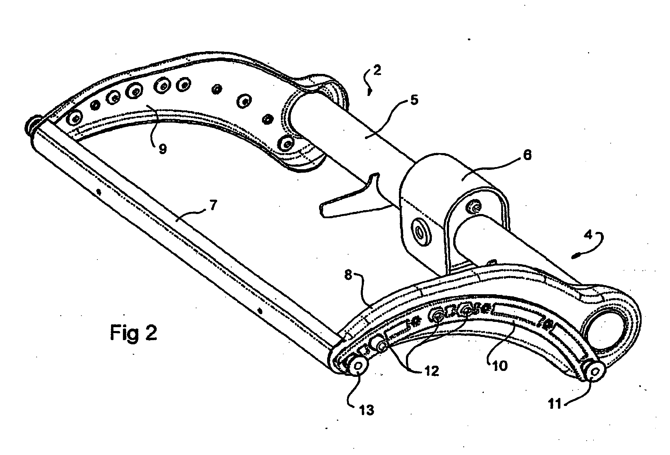

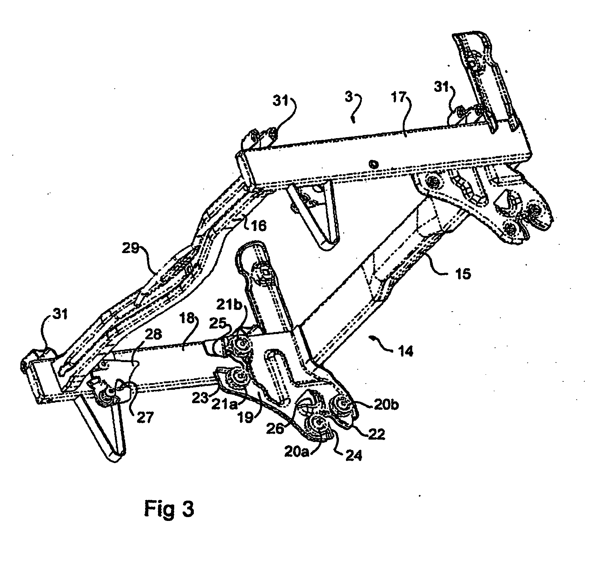

The figures shows a load carrier 1, with a first part 2 (fig. 2), intended to be fixed at a towing hook or similar of a vehicle, and a moveable second part 3 (fig. 3). The first part 2 comprising an essential firmly rectangular framework 4 with an inner beam 5 connected with a coupling device 6 for fastening at the vehicle, a outer beam 7 and two side brackets 8 and 9 arranged between the inner beam 5 and the outer beam 7.

A respective curved guiding rail 10 is arranged on the outside of the side brackets 8 and 9. The side brackets and the guiding rails are shown as separate organ, but naturally, it would be possible to manufacture these in one unit. It would also be possible to use only one side bracket, provided with guiding rails on each side of the side bracket. An essential part of the invention is that the guiding rails having an essential length and a relatively the vehicle upwards arched shape. An arched shape refers to a circular arc having a length of the arc, which corresponds to an essential angular change. In the figures, the guiding rails 10 are shown with a constant radius, but within the frame for the present invention, the guiding rails may of course have a varying radius. The guiding rails 10 having a cross-section in the shape of a T-profile, but also a C-profile would be possible to use. The guiding rails 10 having an inner stop notch 11, a latch rod 12 and an outer stop notch 13, respectively.

The moveable second part 3 comprising an essential rectangular framework 14, with an inner beam 15, an outer beam 16 and side beams 17 and 18. At the inner side of the side beams 17 and 18 is a respective carriage 19 or sledge arranged close to the inner beam 15. The carriage 19 is provided with two pair of wheels 20a and 20b, and 21 a and 21 b, respectively, arranged on a distance from each other in the respective end portion 22 and 23 of the carriage 19. In respective end portion 22 and 23, there is a recess 24 and 25, respectively. The carriage 19 has an additional recess 26. At the outer beam 16, an additional recess 27 and a locking clutch 28 are arranged. The locking clutch 28 is operated by a handle 29, which in a transporting position is hidden by a holder 30 for a licence plate. The holder 30 is tiltable and in a raised position, the holder locks the ability to move the handle 29. When the carriage 19 is used together with a guiding rail 10, having a C-profile, it is sufficient with two wheels, arranged on a distance from each other.

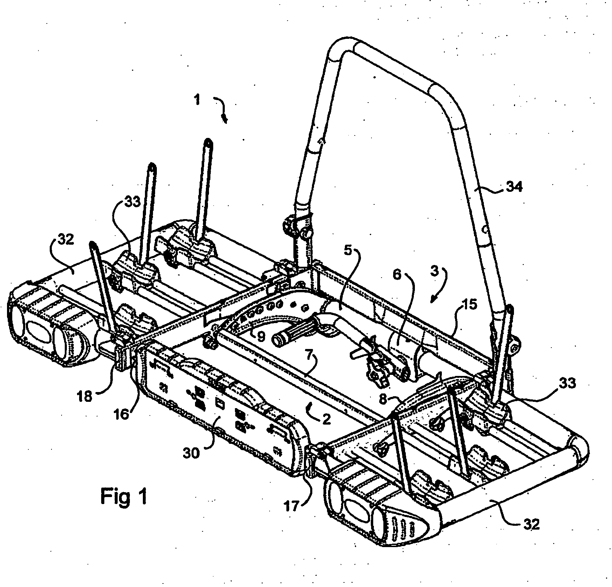

The second part also comprising fastening means 31 for mounting of holders 32 to carry load. In figure 1 a load carrier 1 with holders 32 for bicycles being shown, in which fastening means 33 being used for firmly tighten the wheels of a bicycle. A load carrier arch 34 is used for firmly tighten the frame of the bicycle by means of a previously known gripping means (not shown).

The load carrier 1 is, in the figures shown, intended to carry three bicycles, but the load carrier can naturally be designed for only one, two or several bicycles. Within the frame for the present invention, different kinds of holders can be mounted at the load carrier, which thereby also may carry other kind of loads, such as a box, ski holders or similar.

The load carrier is preferably made of steel plates and aluminium tubes with circular or other suitable profile. The fastening means for the bicycles and similar details are made of plastic. Naturally, other choice of material is within the frame of the present claims.

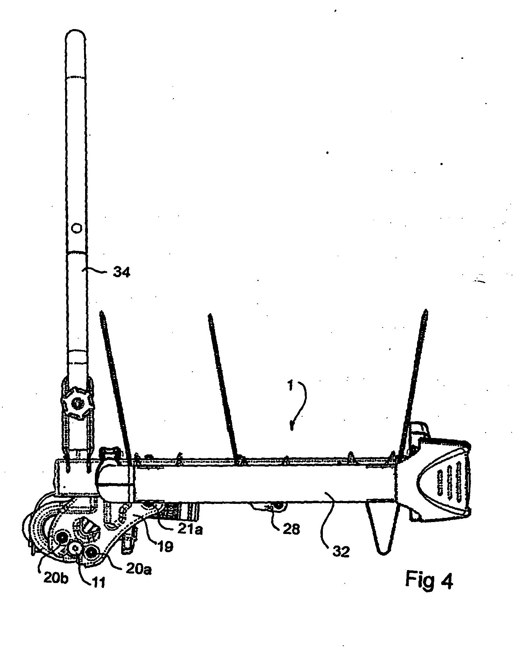

Through the present invention, it is thus possible to firmly tighten a load carrier 1 to a towing hook of a vehicle. In a transporting position, as shows in figure 4, the second part 3 is located in its inner position, wherein the carriage 19 via the recess 24 abuts against the stop notch 11 and via recess 27 against the stop notch 13. Through that the recess 24 and 27 are designed with inclined engagement surfaces, the carriage 19 will centring relative to the stop notches and support against these, so that the wheels 20 and 21 will be unloaded. In this transporting position, the second part is being blocked by the locking clutch 28.

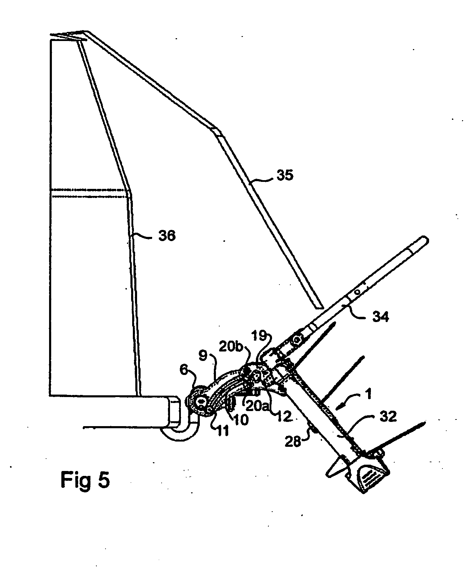

By tilting the holder 30 downwards and pulling the handle 29 the locking clutch 28 is opened, wherein the second part 3 can be pulled out from the vehicle. The carriage 19 is moved from the engagement with the stop notches 11 and 13, whereby the wheels 20 and 21 are brought into engagement with the guiding rails 10. By the fact that the guiding rails 10 are curved the second part 3 will successive be moved out from the vehicle simultaneously as it will be tilted downwards. This tilting or turning will proceed until the recess 25 hits the outer stop notch 13 and the recess 26 hits one of the latch pin 12. In addition, in this loading position, shown in figure 5, the inclined engagement surfaces of the recess 25 and 26 will achieve a centring of the carriage 19, whereby the wheels 20 and 21 become unloaded. Through arranging several latch rods 12, it becomes possible to adopt how far a load carrier 1 will be tilted and thereby adopt the load carrier to different car models. It is also possible that the latch rods are designed spring loaded, in such way that the tilting can be performed in several steps. In the loading position, where the load carrier 1 has been pulled out and tilted downwards, as appear from figure 5, a lid of the trunk 35 of the vehicle 36 may be opened without hitting the load carrier 34 or other parts of the load carrier 1.

It would within the frame of the present claims also be possible that the guiding rails 10 are arranged on the inside of the side brackets 8 and 9, or that the second part 3 comprising at least one curved guiding rail 10, which extends backwards out from the vehicle, wherein the first part 2 comprising at least one transport device 19, which runs along said guiding rail 10. The wheels could also be replaced by sliding means, for example, by a combination of a complete C-profile or a part of a C-profile guiding rail with a T-profile guiding rail.

In addition, the load carrier 1 can be provided with a gas spring or similar organ arranged between the first part 2 and the second part 3 for facilitate displacement between the loading position and the transporting position of a loaded load carrier 1. Alternately the load carrier 1 can be provided with a motor operation, for example, the guiding rail may, at least partly, be provided with teeth and that at least one wheel being replaced by a motor operated toothed wheel.

## Claims

1. Load carrier (1) for a vehicle, which load carrier has a first part (2) firmly connected with a coupling device (6) for fastening at the vehicle, a thereto displaceable second part (3) movably connected with said first part and having holders (32) for carrying load, wherein the second part (3) is moveable, from a transporting position (fig. 4) along an arched path to a loading position (fig. 5), to permit access to the trunk of the vehicle by achieving a simultaneously extraction and tilting of the second part (3), and wherein in the loading position the load carrier is mounted on the vehicle with the second part tilted, **CHARACTERISED in that**
the first part (2) comprises at least one curved guiding rail (10), which extends backwards out of the vehicle, wherein the second part (3) comprises at least one transport device (19) which runs along said guiding rail (10).

2. Load carrier according to claim 1, **CHARACTERISED in that** the first part (3) is formed of an essential rectangular framework (4), comprising a coupling device (6) fastened to an innerbeam (5), which coupling device (6) is intended to be anchored at a towing hook or similar of the vehicle, and at least one side bracket (8, 9), which extends out from the vehicle and supports the curved guiding rail (10).

3. Load carrier according to claim 2, **CHARACTERISED in that** the curved guiding rail (10) is in the shape of a T-profile and that said transport device (19) comprising a carriage or a sledge, provided with at least two pair of wheels (20, 21) or similar rolling or sliding devices, which runs on each side of the curved guiding rail (10).

4. Load carrier according to claim 2, **CHARACTERISED in that** the curved guiding rail (10) is in the shape of a C-profile and that said transport device (19) comprising a carriage or a sledge, provided with at least two wheels (20, 21) or similar rolling or sliding devices, which runs in the curved guiding rail (10).

5. Load carrier according to claim 3 or 4, **CHARACTERISED in that** the curved guiding rail (10) having at least one in each end arranged stop notch (11, 13), which cooperate with at least one recess (24 - 27) in the transport device (19).

6. Load carrier according to claim 5, **CHARACTERISED in that** said recess (24-27) is formed with inclined engagement surfaces, which cause a centring of the transport device (19) relatively the curved guiding rail (10).

7. Load carrier according to claim 6, **CHARACTERISED in that** the load carrier **(1)** having at least one locking clutch (28), which fix the second part (3) to the first part (2) in the transporting position.

8. Load carrier according to claim 7, **CHARACTERISED in that** the locking clutch (28) is operated by a handle (29), which in the transporting position is hidden of a holder (30) for a licence plate or similar, wherein the holder (30) is tiltable arranged and designed in such way that in a raised position the holder (30) locks the ability to move the handle (29).

9. Load carrier (1) for a vehicle, which load carrier has a first part (2) firmly connected with a coupling device (6) for fastening at the vehicle, a thereto displaceable second part (3) movably connected with said first part and having holders (32) for carrying load, wherein the second part (3) is moveable, from a transporting position (fig. 4) along an arched path to a loading position (fig. 5), to permit access to the trunk of the vehicle by achieving a simultaneously extraction and tilting of the second part (3), and wherein in the loading position the load carrier is mounted on the vehicle with the second part tilted, **CHARACTERISED in that**
the second part (3) comprises at least one curved guiding rail, which extends backwards out from the vehicle, wherein the first part (2) comprises at least one transport device, along which said guiding rail runs.

## Patentansprüche

1. Lastträger (1) für ein Fahrzeug, wobei der Lastträger einen ersten Teil (2), der mit einer Kopplungsvorrichtung (6) für die Befestigung am Fahrzeug fest verbunden ist, und einen daran verlagerbaren zweiten Teil (3), der mit dem ersten Teil beweglich verbunden ist und Halterungen (32) zum Tragen einer Last besitzt, umfasst, wobei der zweite Teil (3) aus einer Transportposition (Fig. 4) längs eines gekrümmten Wegs in eine Beladungsposition (Fig. 5) beweglich ist, um Zugang zum Kofferraum des Fahrzeugs zu ermöglichen, indem ein gleichzeitiges Herausziehen und Neigen des zweiten Teils (3) erzielt wird, und wobei in der Beladungsposition der Lastträger so am Fahrzeug angebracht ist, dass der zweite Teil geneigt ist,
**dadurch gekennzeichnet, dass**
der erste Teil (2) wenigstens eine gebogene Führungsschiene (10) umfasst, die sich von dem Fahrzeug nach hinten erstreckt, wobei der zweite Teil (3) wenigstens eine Transportvorrichtung (19) umfasst, die längs der Führungsschiene (10) läuft.

2. Lastträger nach Anspruch 1, **dadurch gekennzeichnet, dass** der erste Teil (3) aus einem im Wesentlichen rechtwinkligen Rahmenwerk (4) gebildet ist, das eine Kopplungsvorrichtung (6), die an einem inneren Träger (5) befestigt ist, wobei die Kopplungsvorrichtung (6) an einer Anhängevorrichtung oder dergleichen des Fahrzeugs verankert werden soll, und wenigstens einen Seitenarm (8, 9), der sich von dem Fahrzeug nach außen erstreckt und die gebogene Führungsschiene (10) trägt, umfasst.

3. Lastträger nach Anspruch 2, **dadurch gekennzeichnet, dass** die gebogene Führungsschiene (10) die Form eines T-Profils hat und dass die Transportvorrichtung (19) einen Wagen oder einen Schlitten umfasst, der mit wenigstens zwei Räderpaaren (20, 21) oder ähnlichen Roll- oder Gleitvorrichtungen versehen ist, die auf jeder Seite der gebogenen Führungsschiene (10) laufen.

4. Lastträger nach Anspruch 2, **dadurch gekennzeichnet, dass** die gebogene Führungsschiene (10) die Form eines C-Profils hat und dass die Transportvorrichtung (19) einen Wagen oder einen Schlitten umfasst, der mit wenigstens zwei Rädern (20, 21) oder ähnlichen Roll- oder Gleitvorrichtungen versehen ist, die in der gebogenen Führungsschiene (10) laufen.

5. Lastträger nach Anspruch 3 oder 4, **dadurch gekennzeichnet, dass** die gebogene Führungsschiene (10) wenigstens eine in jedem Ende angeordnete Anschlagraste (11, 13) besitzt, die mit wenigstens einer Aussparung (24-27) in der Transportvorrichtung (19) zusammenwirken.

6. Lastträger nach Anspruch 5, **dadurch gekennzeichnet, dass** die Aussparung (24-27) mit geneigten Eingriffoberflächen ausgebildet ist, die eine Zentrierung der Transportvorrichtung (19) relativ zu der gebogenen Führungsschiene (10) bewirken.

7. Lastträger nach Anspruch 6, **dadurch gekennzeichnet, dass** der Lastträger (1) wenigstens eine Verriegelungskupplung (28) aufweist, die in der Transportposition den zweiten Teil (3) an dem ersten Teil (2) befestigt.

8. Lastträger nach Anspruch 7, **dadurch gekennzeichnet, dass** die Verriegelungskupplung (28) durch einen Griff (29) betätigt wird, der in der Transportposition durch einen Halter (30) für ein Kennzeichen oder dergleichen verborgen ist, wobei der Halter (30) neigbar angeordnet und in der Weise entworfen ist, dass eine erhöhte Position des Halters (30) die Fähigkeit, den Griff (29) zu bewegen, verriegelt.

9. Lastträger (1) für ein Fahrzeug, wobei der Lastträger einen ersten Teil (2), der mit einer Kopplungsvorrichtung (6) für die Befestigung am Fahrzeug fest verbunden ist, und einen daran verlagerbaren zweiten Teil (3), der mit dem ersten Teil beweglich verbunden ist und Halterungen (32) zum Tragen einer Last besitzt, umfasst, wobei der zweite Teil (3) aus einer Transportposition (Fig. 4) längs eines gekrümmten Wegs in eine Beladungsposition (Fig. 5) beweglich ist, um Zugang zum Kofferraum des Fahrzeugs zu ermöglichen, indem ein gleichzeitiges Herausziehen und Neigen des zweiten Teils (3) erzielt wird, und wobei in der Beladungsposition der Lastträger so am Fahrzeug angebracht ist, dass der zweite Teil geneigt ist,
**dadurch gekennzeichnet, dass**
der zweite Teil (3) wenigstens eine gebogene Führungsschiene umfasst, die sich von dem Fahrzeug nach hinten erstreckt, wobei der erste Teil (2) wenigstens eine Transportvorrichtung umfasst, entlang der die Führungsschiene läuft.

## Revendications

1. Porte-charge (1) pour un véhicule, ledit porte-charge ayant une première partie (2) solidement raccordée à un dispositif d'accouplement (6) destiné à être fixé sur le véhicule, une deuxième partie (3) y étant déplaçable, raccordée de manière mobile à ladite première partie et ayant des supports (32) pour porter une charge, la deuxième partie (3) étant mobile d'une position de transport (Fig. 4) le long d'un trajet courbe jusqu'à une position de chargement (Fig. 5), destinée à permettre l'accès au coffre du véhicule en effectuant une extraction et une inclinaison simultanées de la deuxième partie (3), et dans la position de chargement le porte-charge étant raccordée au véhicule de manière que la deuxième partie est inclinée,
**caractérisé en ce que**
la première partie (2) comprend au moins un rail de guidage courbe (10) qui s'étend vers l'arrière à partir du véhicule, la deuxième partie (3) comprenant au moins un dispositif de transport (19) qui se déplace le long dudit rail de guidage (10).

2. Porte-charge selon la revendication 1, **caractérisé en ce que** la première partie (3) est formée d'un cadre (4) sensiblement rectangulaire comprenant un dispositif d'accouplement (6) fixé à une traverse intérieure (5), ledit dispositif d'accouplement (6) étant destiné à être ancré sur un crochet de remorquage ou élément similaire du véhicule, at au moins un bras-support latéral (8, 9) qui s'étand vers l'extérieur depuis le véhicule et supporte le rail de guidage courbe (10).

3. Porte-charge selon la revendication 2, **caractérisé en ce que** le rail de guidage courbe (10) se présente sous la forme d'un profilé en T et **en ce que** ledit dispositif de transport (19) comprend un chariot ou un traîneau muni d'au moins deux paires de roues (20, 21) ou dispositifs roulants ou glissants similaires, que se déplace sur chaque côté du rail de guidage courbe (10).

4. Porte-charge selon la revendication 2, **caractérisé en ce que** le rail de guidage courbe (10) se présente sous la forme d'un profilé en C et **en ce que** ledit dispositif de transport (19) comprend un chariot ou un traîneau muni d'au moins deux roues (20, 21) ou dispositifs roulants ou glissants similaires, que se déplace dans le rail de guidage courbe (10).

5. Porte-charge selon la revendication 3 ou 4, **caractérisé en ce que** le rail de guidage courbe (10) possède au moins un cran d'arrêt (11, 13) placé à chaque extrémité, qui coopère avec au moins un évidement (24-27) dans le dispositif de transport (19).

6. Porte-charge selon la revendication 5, **caractérisé en ce que** ledit évidement (24-27) est formé avec des surfaces d'engagement inclinées, ce qui provoque un centrage du dispositif de transport (19) par rapport au rail de guidage courbe (10).

7. Porte-charge selon la revendication 6, **caractérisé en ce que** le porte-charge (1) présente au moins un embrayage de verrouillage (28), qui fixe la deuxième partie (3) à la première partie (2) dans la position de transport.

8. Porte-charge selon la revendication 7, **caractérisé en ce que** l'embrayage de verrouillage (28) est actionné par une poignée (29) qui, dans la position de transport, est cachée par un support (30) de plaque d'immatriculation ou similaire, le support (30) étant prévu inclinable et conçu de telle manière que, dans une position relevée, le support (30) interdise la possibilité de déplacer la poignée.

9. Porte-charge (1) pour un véhicule, ledit porte-charge ayant une première partie (2) solidement raccordée à un dispositif d'accouplement (6) destiné à être fixé sur le véhicule, une deuxième partie (3) y étant déplaçable, raccordée de manière mobile à ladite première partie et ayant des supports (32) pour porter une charge, la deuxième partie (3) étant mobile d'une position de transport (Fig. 4) le long d'un trajet courbe jusqu'à une position de chargement (Fig. 5), destinée à permettre l'accès au coffre du véhicule en effectuant une extraction et une inclinaison simultanées de la deuxième partie (3), et dans la position de chargement le porte-charge étant raccordée au véhicule de manière que la deuxième partie est inclinée,
**caractérisé en ce que**
la deuxième partie (3) comprend au moins un rail de guidage courbe qui s'étend vers l'arrière à partir du véhicule, la première partie (2) comprenant au moins un dispositif de transport le long duquel le rail de guidage se déplace.
